# EUROPÄISCHE PATENTSCHRIFT

(11) **EP 0 917 274 B1**
(45) Veröffentlichungstag und Bekanntmachung des Hinweises auf die Patenterteilung: **03.01.2007**
(21) Anmeldenummer: 98890330.8
(22) Anmeldetag: 10.11.1998
(51) Int. Cl.: H02K 5/124, F16C 33/72

(54) **Elektromotor**
Electric motor
Moteur électrique

(30) Priorität: 18.11.1997 AT 195597; 10.03.1998 AT 42198
(43) Veröffentlichungstag der Anmeldung: 19.05.1999
(73) Patentinhaber: ATB Austria Antriebstechnik Aktiengesellschaft, 8724 Spielberg (Steiermark) (AT)
(72) Erfinder: Sommer, Rudolf, 8715 St. Lorenzen (AT)
(74) Vertreter: Beer, Manfred

(56) Entgegenhaltungen:
- EP-A- 0 735 644
- DE-A- 2 362 636
- FR-A- 2 650 130
- US-A- 3 552 809
- US-A- 4 373 759
- US-A- 5 714 817

## Beschreibung

Die Erfindung betrifft einen Elektromotor mit den Merkmalen des einleitenden Teils des unabhängigen Anspruches 1.

Aus der FR 2 650 130 A (Fig. 11) ist ein Elektromotor der eingangs genannten Gattung mit Lagerschilden zur Lagerung der Rotorwelle des Elektromotors bekannt, wobei auf der Rotorwelle belüftungsseitig und abtriebsseitig Bauteile befestigt sind. Zwischen dem auf der Rotorwelle festgelegten Bauteil und einem weiteren Bauteil der an dem zugeordneten Lagerschild befestigt ist, ist eine Labyrinthdichtung ausgebildet. Der eine Bauteil ist über eine an ihm angeformte Hülse auf der Rotorwelle festgelegt und trägt eine Ringrippe. Bei dem Elektromotor der FR 2 650 130 A ist an dem am Lagerschild befestigten Bauteil ein nach außen weisender Vorsprung vorgesehen, welcher in die Nut zwischen Hülse und Ringrippe im auf der Rotorwelle angeordneten Bauteil eingreift. Schließlich weist der an der Rotorwelle befestigte Bauteil eine radial abstehende, flanschförmige Anformung auf, die das Lagerschild außen teilweise übergreift.

Die US-5,714,817 A schlägt bei einem Elektromotor einen Spalt in der Labyrinthdichtung mit abwechselnd großer und kleiner Spaltbreite vor, um Bereiche im Spalt zu schaffen, in denen ein Fließen des Schmierfetts verlangsamt ist, so dass es sich dort zwangsweise verstärkt absetzt und dadurch dort Depots des Schmierfetts bildet. Dadurch soll ein Austreten von Fett aus dem Motor besser als mit einem Spalt mit gleichbleibender Spaltbreite vermieden werden.

Die Erfindung stellt sich die Aufgabe, einen Elektromotor zur Verfügung zu stellen, bei dem die Abdichtung zwischen Rotorwelle und den Lagerschilden verbessert ist.

Erfindungsgemäß wird diese Aufgabe bei einem Elektromotor durch die in Anspruch 1 genannten Merkmale gelöst.

Bevorzugte und vorteilhafte Ausgestaltungen des erfindungsgemäßen Elektromotors sind Gegenstand der Unteransprüche.

Durch die erfindungsgemäße Ausbildung des Elektromotors wird durch die zwischen dem auf der Welle sitzenden Bauteil, der sich mit der Welle dreht, und den Lagerschilden gebildete Labyrinthdichtung bei vereinfachter Konstruktion eine verbesserte Abdichtung des Elektromotors, insbesondere gegen Eindringen von Staub, erreicht.

Weitere Einzelheiten, Vorteile und Merkmale der Erfindung ergeben sich aus der nachstehenden Beschreibung bevorzugter Ausführungsbeispiele der Erfindung anhand der Zeichnungen.

Es zeigt:
Fig. 1 die nicht erfindungsgemäße Abtriebsseite eines Elektromotors teilweise im Schnitt und
Fig. 2 die gemäß der Erfindung ausgebildete Belüftungsseite des Elektromotors teilweise im Schnitt.

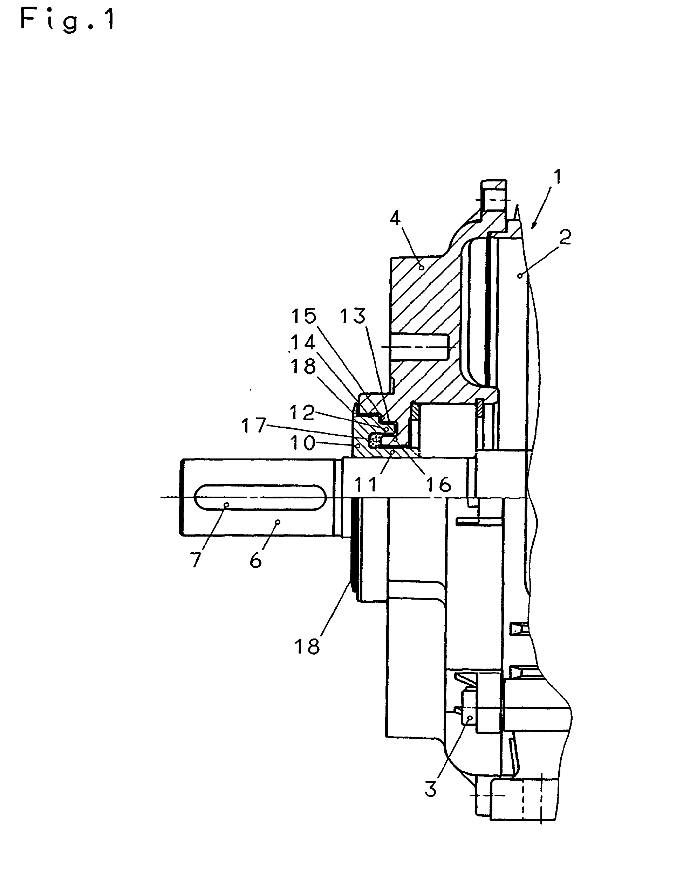

Ein Elektromotor 1 besitzt ein in Fig. 1 nur teilweise gezeigtes Statorgehäuse 2, an dem über eine Verschraubung 3 an beiden Enden Lagerschilde 4 und 5 befestigt sind. In den Lagerschilden 4 und 5 ist eine Rotorwelle 6 gelagert.

Auf der Rotorwelle 6 ist abtriebsseitig (Fig. 1) ein rotationssymmetrischer Bauteil 10 befestigt, der einen zum Elektromotor 1 hin weisenden, hülsenförmigen Ansatz 11 besitzt. Der auf der Rotorwelle 6 sitzende Bauteil 10 besitzt weiters eine zur Achse 7 der Rotorwelle 6 konzentrische, zum Motor 1 hin weisende, vorspringende Ringrippe 12, die in eine entsprechend gegengleich geformte, ringförmige Nut 13 an der Außenseite des abtriebsseitigen Lagerschildes 4 eingreift.

An der Außenseite der Ringrippe 12 des Bauteils 10 ist eine Ringschulter 14 vorgesehen, der eine Ringstufe 15 im Lagerschild 4 gegenüberliegt.

Am Lagerschild 4 ist ein nach außen weisender, ringförmiger Vorsprung 16 vorgesehen, der in eine Nut zwischen der Ringrippe 12 und der Hülse 11 des Bauteils 10 eingreift. Zwischen dem äußeren Ende des ringförmigen Vorsprungs 16 am Lagerschild 5 und dem Boden der Nut zwischen der Ringrippe 12 und der Hülse 11 des Bauteils 10 ist ein Freiraum 17 vorgesehen. In diesem Freiraum 17 kann ein Fettdepot vorgesehen werden.

Zur Ergänzung der so gebildeten Labyrinthdichtung zwischen dem Lagerschild 4 und dem Bauteil 10 besitzt der auf der Rotorwelle 6 festgelegte, sich also mit ihr drehende Bauteil 10 eine radial nach außen abstehende flanschartige Anformung 18, welche die Außenseite des Lagerschildes 4 teilweise übergreift.

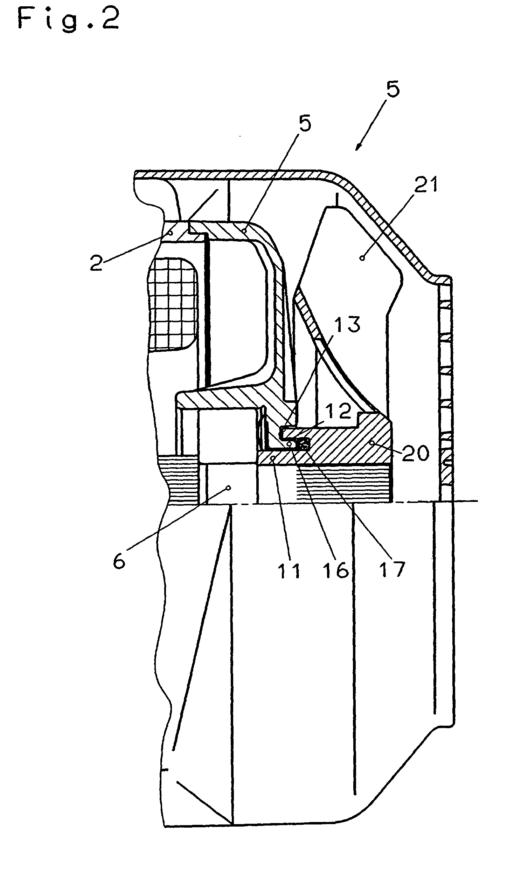

Der in Fig. 2 gezeigte, auf der Rotorwelle 6 auf der Belüftungsseite des Elektromotors 1 festgelegte Bauteil 20 besitzt ebenfalls eine Hülse 11, die an der Rotorwelle 6 anliegt und im Abstand von dieser Hülse 11 eine Ringrippe 12, die in eine nach außen offene, ringförmige Nut 13 im belüftungsseitigen Lagerschild 5 des Elektromotors 1 eingreift. Das Lagerschild 5 besitzt auch auf der Belüftungsseite innerhalb der nach außen hin offenen Nut 13 einen ringförmigen Vorsprung 16, der in die Nut zwischen der Ringrippe 12 und der Hülse 11 des Bauteils 20 so eingreift, daß ein Freiraum 17 für ein Fettdepot verbleibt.

Der belüftungsseitig angeordnete Bauteil 20 ist wie in Fig. 2 gezeigt gleichzeitig als Träger für ein Lüfterrad 21 ausgebildet. Dabei sind das Lüfterrad 21 und der auf der Rotorwelle 6 belüftungsseitig aufgesetzte Bauteil 20 einstückig ausgebildet.

Da auf die Bauteile 10 und 20, die auf die Rotorwelle 6 aufgesetzt sind, und die zusammen mit den ihnen zugeordneten Lagerschilden 4 und 5 die beschriebenen Labyrinthdichtungen bilden, keinen nennenswerten Kräfte einwirken, können diese als Kunststoff(-spritzguß)-teile ausgeführt sein.

Zusammenfassend kann ein Ausführungsbeispiel der Erfindung wie folgt dargestellt werden:
An der Rotorwelle 6 eines Elektromotors 1 sind belüftungsseitig und abtriebsseitig sich mit der Rotorwelle 6 drehende Bauteile 10 und 20 angeordnet. Die Bauteile 10 und 20 ergänzen sich mit dem belüftungsseitigen Lagerschild 5 und mit dem abtriebsseitigen Lagerschild 4 zu Labyrinthdichtungen.

## Patentansprüche

1. Elektromotor (1) mit einer Rotorwelle (6) und mit Lagerschilden (4 und 5), zur Lagerung der Rotorwelle (6) des Elektromotors (1), wobei auf der Rotorwelle (6) abtriebsseitig und belüftungsseitig je ein Bauteil (10, 20) über eine an ihm angeformte Hülse (11) befestigt ist, wobei die auf der Rotorwelle (6) festgelegten Bauteile (10, 20) und das jeweils zugeordnete Lagerschild (4, 5) Labyrinthdichtungen bilden, wobei die auf der Rotorwelle (6) angeordneten Bauteile (10, 20) eine zum Motor (1) hin weisende, vorspringende Ringrippe (12), die Teil der Labyrinthdichtung ist, besitzen, welche Ringrippen (12) mit Abstand radial außerhalb der Hülsen (11) der Bauteile (10, 20) und zur Achse (7) der Rotorwelle (6) konzentrisch vorgesehen sind, wobei in die Nut zwischen Hülse (11) und Ringrippe (12) ein ringförmiger nach axial außen weisender Vorsprung (16) des Lagerschildes (4, 5) eingreift, **dadurch gekennzeichnet, dass** der belüftungsseitig angeordnete, auf der Rotorwelle (6) festgelegte Bauteil (20) ein mit ihm einstückig ausgebildetes Lüfterrad (21) trägt.

2. Motor nach Anspruch 1, **dadurch gekennzeichnet, dass** zwischen dem Bauteil (20) und dem Lagerschild (5) Raum (17) für die Aufnahme eines Fettdepots vorgesehen ist.

3. Motor nach Anspruch 2, **dadurch gekennzeichnet, dass** der Raum (17) für die Aufnahme des Fettdepots zwischen dem freien Ende des axial nach außen weisenden Vorsprunges (16) des Lagerschildes (5) und dem Boden der Nut zwischen der Hülse (11) und der Ringrippe (12) des Bauteils (20) vorgesehen ist.

4. Motor nach einem der Ansprüche 1 bis 3, **dadurch gekennzeichnet, dass** der Bauteil (20) aus Kunststoff besteht.

## Claims

1. Electric motor (1) having a rotor shaft (6) and bearing plates (4 and 5) for supporting the rotor shaft (6) of the electric motor (1), a component (10, 20) being fastened to the rotor shaft (6) on both the drive side and the ventilation side via an integrally moulded sleeve (11) on said component, the components (10, 20) fixed on the rotor shaft (6) and the respectively associated bearing plates (4, 5) forming labyrinth seals, the components (10, 20) arranged on the rotor shaft (6) each having a projecting annular rib (12) which points towards the motor (1) and is part of the labyrinth seal, these annular ribs (12) being provided at a spacing radially outside the sleeves (11) of the components (10, 20) and concentrically with the axis (7) of the rotor shaft (6), an annular axially outwardly pointing projection (16) of the bearing plate (4, 5) engaging in the groove between sleeve (11) and annular rib (12), **characterised in that** the component (20) fastened to the rotor shaft (6) and arranged on the ventilation side bears an impeller (21) formed with it as one piece.

2. Motor according to claim 1, **characterised in that** space (17) for receiving a deposit of grease is provided between the component (20) and the bearing plate (5).

3. Motor according to claim 2, **characterised in that** the space (17) for receiving the deposit of grease is provided between the free end of the axially outwardly pointing projection (16) of the bearing plate (5) and the base of the groove between the sleeve (11) and the annular rib (12) of the component (20).

4. Motor according to one of claims 1 to 3, **characterised in that** the component (20) consists of plastics material.

## Revendications

1. Moteur électrique (1) comprenant un arbre de rotor (6) et des flasques-paliers (4 et 5) pour le montage de l'arbre de rotor (6) du moteur électrique (1), un élément (10, 20) étant fixé sur l'arbre de rotor (6), respectivement côté sortie et côté ventilation, par l'intermédiaire d'un manchon (11) formé sur chaque élément, les éléments (10, 20) fixés à l'arbre de rotor (6) et la flasque-palier (4, 5) associée formant entre eux des joints d'étanchéité à labyrinthe, les éléments (10, 20) disposés sur l'arbre de rotor (6) présentant chacun une nervure annulaire (12) qui fait saillie en direction du moteur (1) et fait partie du joint à labyrinthe, lesquelles nervures annulaires (12) sont prévues radialement à l'extérieur des manchons (11) des éléments (10, 20) et à distance de ceux-ci et sont concentriques à l'axe (7) de l'arbre de rotor (6), une saillie annulaire (16), tournée axialement vers l'extérieur, de la flasque-palier (4, 5) s'engageant dans la rainure entre le manchon (11) et la nervure annulaire (12), **caractérisé par le fait que** l'élément (20) fixé sur l'arbre de rotor (6), côté ventilation, porte une roue de ventilateur (21) réalisée d'une seule pièce avec lui.

2. Moteur selon la revendication 1, **caractérisé par le fait qu'**entre l'élément (20) et la flasque-palier (5), il est prévu un espace (17) pour la réception d'un dépôt de graisse.

3. Moteur selon la revendication 2, **caractérisé par le fait que** l'espace (17) pour la réception du dépôt de graisse est prévu entre l'extrémité libre de la saillie (16), orientée axialement vers l'extérieur, de la flasque-palier (5) et le fond de la rainure formée entre le manchon (11) et la nervure annulaire (12) de l'élément (20).

4. Moteur selon une des revendications 1 à 3, **caractérisé par le fait que** l'élément (20) est en matière plastique.
